# EUROPEAN PATENT SPECIFICATION

(11) **EP 4 488 183 B1**
(45) Date of publication and mention of the grant of the patent: **27.05.2026**
(21) Application number: 23183431.8
(22) Date of filing: 04.07.2023
(51) Int. Cl.: B64D 45/02, F03D 80/30, H02G 13/00

(54) **OPTIMISED LIGHTNING STRIKE PROTECTION FOR AN OBJECT**
OPTIMIERTER BLITZSCHLAGSCHUTZ FÜR EIN OBJEKT
PROTECTION OPTIMISÉE CONTRE LA FOUDRE D'UN OBJET

(43) Date of publication of application: 08.01.2025
(73) Proprietor: Airbus Operations GmbH, 21129 Hamburg (DE)
(72) Inventor: Kaste, Michael, Hamburg (DE); Weber, Lutz, Hamburg (DE)

(56) References cited:
- EP-A1- 2 778 072
- WO-A1-2011/080177
- US-A- 3 482 802
- US-A- 3 989 984
- US-A- 4 628 402
- US-A- 4 789 918
- US-A- 5 542 624
- US-A1- 2006 051 592

## Description

The present invention concerns a method of providing an object (such as an aircraft, a spacecraft, a wind turbine, a vessel, for example) with a lightning strike protection. The invention further yields an arrangement comprising an object endowed with a lightning strike protection.

Objects such as aircrafts, rockets, or wind turbines are typically provided with a lightning strike protection sufficient to prevent catastrophic or hazarded events, or at least to reduce damages which result from a lightning strike.

A lightning striking a flying object typically attaches the object in a first point (entry point) and detaches from the object in another point (exit point) thereof. Accordingly, high electrical currents flow from the entry point to the exit point, thus through the object.

In particular, if the object is made of a composite material not efficiently conducting the electrical current, this may result in severe damages. To address this problem, in document US 2005/0213278 A1 a lightning damage protection for composite aircrafts is disclosed. Therein, a Faraday cage is defined in an exterior surface of the aircraft body, the Faraday cage comprising a continuous, electrically conductive grid.

In document DE 10 2006 046 002 A1, a layer system is disclosed, a covering layer of which contains polarisable particles. Such particles cause a widespread formation of streamers and, thereby, a distribution of current flow and heat introduction on a greater area, such that a thermal stress is reduced.

Document US 2022 186051 A1 discloses a coating providing a lightning strike protection. From document US 2019 382 129 A1, an aircraft with a surface structure comprising a lightning protection device is known.

From document US 4 628 402 A, lightning protection of fasteners in composite material is known. Document US 3 482 802 A discloses lightning protection for aircraft components, and document US 4 789 918 A presents a fastened lightning protection repair system and a method for its use. Documents EP 2 778 072 A1 and US 5 542 624 A disclose a lightning protection system and a lightning strike protection, respectively. From document WO 2011/ 080177 A1, a lightning protection of a wind turbine blade is known. Document US 3 989 984 A discloses aircraft lightning protection means, and document US 2006/0051592 A1 a wide area lightning diverter overlay.

The known protection systems ensure a safe completion of an operation of the respective object. A respective lightning strike, however, nevertheless often leaves its marks in the form of damages. The locations of such defects are typically randomly distributed on a surface of the object. The damages usually have to be repaired to maintain the object's reliability and the safety of its operation.

It is an object of the present invention to provide a technique facilitating a reduced complexity and operating expense of repairs of damages resulting from lightning strikes.

The object is achieved by a method according to claim 1 and by an arrangement according to claim 10. Advantageous embodiments are disclosed in the dependent claims, the description and the figures.

A method according to the present invention serves to provide an object with a lightning strike protection. Therein, the provided lightning strike protection may be a stand-alone lightning protection or a lightning protection provided in addition to an already existing lightning protection means of the object.

The method comprises identifying at least one spot on a surface of the object, which at least one spot is intended to be protected against a possible lightning damage. The identifying may be based on an effort and/or a cost respectively to be expected for repairing the object in the at least one spot if it was damaged by a lightning strike. For instance, the identifying may be based on an accessibility of the at least one spot from an environment of the object, and/or on a complexity the object has in and/or adjacent to the at least one spot, and/or on a material from which the object is made in and/or adjacent to said at least one spot.

The method further comprises identifying one or more region/s on the object's surface which has/have a damage avoidance priority which is lower than a damage avoidance priority the at least one spot has. The damage avoidance priority of the region or spot, respectively, may reflect an importance an avoidance of a damage in the region or spot is considered to have, such as due to a disadvantage resulting from a respective damage. In other words, the spot's damage avoidance priority and the region's damage avoidance priority may reflect a respective preference (e.g., need and/or advantage) at which the spot or region, respectively, is to be protected against damages caused by a lightning strike.

For instance, as compared to the at least one spot, the one or more region/s may be less important for the object (e.g., for the object's safe use and/or operation), and/or require less effort and/or costs for being repaired if damaged by a lightning strike. Accordingly, the identifying of the one or more regions may be based on an accessibility of the respective region from an environment of the object, and/or on a complexity the object has in and/or adjacent to the respective region, and/or based on a material from which the object is made in and/or adjacent to the respective region.

In particular, the damage avoidance priority thus may inversely correspond to a reparability the object has in the at least one spot and in the one or more region/s, respectively.

Said identifying the at least one spot may comprise assigning the at least one spot its damage avoidance priority. Additionally or alternatively, said identifying the one or more region may comprise assigning the one or more region/s its said (lower) damage avoidance priority.

The method according to the present invention further comprises covering the at least one spot with a portion of a flash-repellent layer, such as coating or a foil. The flash-repellent layer extends (at least) to at least one of the one or more region/s.

Therein, and not within the scope of the claims, the at least one region may remain at least partially bare of any cover. According to the claimed invention, the at least one region is at least partially covered with a further portion of the flash-repellent layer, said portion having a lower breakdown voltage than said portion covering the at least one spot. Not within the scope of the claims, said portion may be weaker than said portion covering the at least one spot by, for instance, said flash-repellent layer's further portion covering the at least one region being thinner and/or less compact than the flash-repellent layer's portion covering the at least one spot. As a further possibility, the at least one region may (additionally or, and in that case not within the scope of the claims, alternatively) at least partially be provided with an electrically conductive covering. Such covering and/or further portion of the flash-repellent layer may comprise a paint with metallic particles (e.g., of copper, a copper alloy and/or of a corrosion resistant steel) and/or a wind turbine lightning receptor, for instance. The covering/s may be positioned directly on said at least one region or with a further material in-between, such as a (further) portion of the flash-repellent layer covering the region. Additionally or, and in that case not within the scope of the claims, alternatively, the at least one region may be provided with an installed lightning receptor such as a vortex generator or lightning rod or special fastener.

As is to be understood, the order of the above-mentioned steps may be different than the order in which they are described. For instance, the one or more region/s may at least partially be identified before the at least one spot is identified. Additionally or alternatively, in the respective alternative, the at least one spot may be covered, with said portion of the flash-repellent layer, before or while or after the one or more region/s is/are covered with the respective further portion of the flash-repellent layer or provided with the respective covering.

An arrangement according to the present invention comprises an object and a lightning strike protection therefor. The object has a surface comprising one or more region/s and at least one spot. For instance, the at least one spot may be easier to access, from an environment of the object, than the one or more region/s. Additionally or alternatively, a complexity of the object in and/or adjacent to the at least one spot may be higher than a complexity of the object in or adjacent the one or more region/s, and/or a material of which the object is made in and/or adjacent to said at least one spot may be more valuable and/or more laborious to repair than a material of which the object is made in or adjacent to the one or more region/s.

The lightning protection comprises a flash-repellent layer covering, with a portion thereof, the at least one spot and extending to at least one of the one or more region/s. Therein, the at least one region is at least partially covered with a further portion of the flash-repellent layer, which portion has

In particular, the object of an arrangement according to the present invention may be provided with the lightning strike protection thereof by applying a method according to an embodiment of the present invention.

The present invention facilitates an advantageous control of where damages resulting from a lightning strike occur: Indeed, a surface discharge happening in a pre-lightning strike phase is led to the at least one region being preferred to be hit by lightning.

There is thus provided an arc attachment point (i.e., a point in which a possible lightning strike attaches the object), while the discharge is kept away from the at least one spot covered by the flash-repellent layer, such that the at least one spot is protected from being struck and damaged by the lightning. Accordingly, inevitable damages can be caused to occur, instead of in the at least one spot, in the one or more regions which may be less important for the object or where a repair of the object may require less effort and/or less cost. In particular, the present invention provides a lightning strike protection design capable of taking into account a respective lightning strike damage repair impact of the at least one spot and the region/s.

According to advantageous embodiments of the present invention, the object may be an aircraft, a spacecraft (in particular, a rocket or a missile), a wind turbine, a vessel, or a transport vehicle (such as a truck or automobile (car).

A distance (i.e., a length of a shortest possible path) along the surface of the object, between the at least one spot (in particular, its border) and at least one of the one or more region/s (in particular, its border) may preferably be at most 2m, at most 1.5m, at most 1m or at most 0.5m. Such relatively short path along which a surface discharge may occur (until the current is electrically conducted, through the one or more region/s, into the object) ensures a particularly reliable shifting of possible damages to the one or more region/s, where a repair of the damage may be less complex and/or costly than in the at least one spot, or which are less important for the object. In embodiments where the object is devised for movement, such as an aircraft or a spacecraft as mentioned above, the distance between the at least one spot and a region which is closest in a direction opposite to a designated direction of movement of the object preferably is at most 2m, at most 1.5m, at most 1m or at most 0.5m. In these embodiments, a surface discharge in the direction opposite to the moving direction and towards an exit point is advantageously used.

The at least one spot may preferably be at least partially positioned on a surface of a component of the object. That is, in these cases, at least a portion of the at least one spot forms part of said surface of the component. For example, such component may be a fastener, a window frame, a door frame, or a skin integrated antenna, respectively of the object. In embodiments where the object is an aircraft as mentioned above, the at least one spot may preferably be positioned on a fuselage portion of the object's surface (i.e., on a surface of the aircraft's fuselage).

According to advantageous embodiments of the method according to the present invention, various regions (on the object's surface) having a lower damage avoidance priority than the at least one spot (thus being preferred to be hit by lightning) are identified.

Therein, preferably each field of 2m x 2m (or each field of 1.5m x 1.5m or each field of 1m x 1m) within an area of the object's surface which covers at least 8m x 10m or at least 12m x 18m comprises at least one of the regions. The regions are thus distributed closely to each other at least within said surface area.

Analogously, the surface of the object of an arrangement according to an embodiment of the present invention may comprise a plurality of regions on said surface. Therein, a density of the regions may preferably be such that, within an area of the object's surface which covers at least 8m x 10m or at least 12m x 18m, each field of 2m x 2m (or each field of 1.5m x 1.5m or each field of 1m x 1m) comprises at least one of the regions.

These embodiments ensure a dense distribution of the arc attachment points and, therewith, a reliable conduction of a current resulting from a possible lightning strike through at least one of the region/s into the object.

A diameter of at least one of the one or more region/s may preferably be at most 20cm, at most 16cm or at most 12cm; such size of region/s keeps the possible area to be repaired advantageously small. Additionally or alternatively, the diameter may preferably be at least 4cm, at least 7cm or at least 10cm. Thereby, a safe entry of the current through the at least one region into the object is ensured.

As is to be understood, the diameter is defined as the largest distance (being the length of a shortest possible path along the object's surface) occurring between border points (in this case, of the at least one region).

The flash-repellent layer may preferably have a breakdown voltage (i.e., a dielectric strength) of at least 20MV/m, at least 30MV/m or at least 40MV/m. In particular, the flash-repellent layer may be made of an electrically insulating (non-conducting) material. Advantageously, it may comprise a vinyl foil, in particular a foil at least partially made of polyvinyl chloride. Preferably, the flash-repellent layer comprises a self-adhesive foil. Such foil may be transparent in at least one portion thereof and/or include a sign, a text and/or a drawing. According to advantageous embodiment, the flash-repellent layer may have a thickness of at most 150 µm or at most 120 µm or at most 100 µm.

According to advantageous embodiments, said covering and/or further portion is electrically connected to an electrically conductive structure of the object.

Such electrically conductive structure of the object may comprise at least a portion of a frame, a housing (shell), and/or a further lightning surface protection means such as an expanded metal foil and/or a painting comprising metal particles; in particular, in both these cases said metal may comprise copper and/or a copper alloy and/or a corrosion resistant steel.

Preferably, the structure forms an electrically conductive path extending from a first side of the object to a second side opposite to the first side. For instance, such first side may be on a roof region of the object, whereas the second side may be on a bottom region thereof. Additionally or alternatively, if the object is an aircraft or a spacecraft, the first side may be in a nose part of the object, whereas the second side may be in a rear part of the object.

The at least one spot may preferably be at least partially separate (or even electrically insulated) from the electrically conductive structure. If the electrically conductive structure comprises a further lightning surface protection means (such as an expanded metal foil or a painting comprising metal particles) as mentioned above, the at least one spot may preferably be at least partially bare of (uncovered by) said means. Thereby, a particularly good protection of the at least one spot from damages resulting from a lightning current can be achieved.

Additionally or alternatively, in embodiments where the at least one region is at least partially provided with an electrically conductive covering, the flash-repellent layer may encompass the at least one of the covering/s. In particular, the one or more covering/s may be embedded in the flash-repellent layer.

An outer surface (i.e., a surface facing away from the object) of the flash-repellent layer may advantageously smoothly transition to an outer surface of the at least one covering. Accordingly, a low air resistance is ensured along the outer surface. In particular, a thickness of the at least one covering may advantageously conform to a thickness the flash-repellent layer has adjacent to the at least one covering.

According to advantageous embodiments, a method according to the present invention comprises determining a position of at least one of the one or more regions and/or determining a size of at least one of the one or more region/s. The determining may advantageously be made a based on a simulation of an electrical field of the surface of the object before a presumed lightning strike. Additionally or alternatively, the determining may be made based on a simulation of an airflow around the object and/or based on at least one simulation of an icing on the surface of the object. Thereby, a distribution of the region/s and, therewith, of the arc attachment points can be optimised. The determining may (respectively) be made by means of a numerical simulation tool. The method may comprise performing the respective simulation/s.

In what follows, the present invention is explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1:: a portion of an object with a conventional lightning strike protection in a sectional view;
- Fig. 2:: a portion of an arrangement according to an exemplary embodiment of the present invention in a sectional view; and
- Fig. 3:: an arrangement according to an exemplary embodiment of the present invention in a side view.

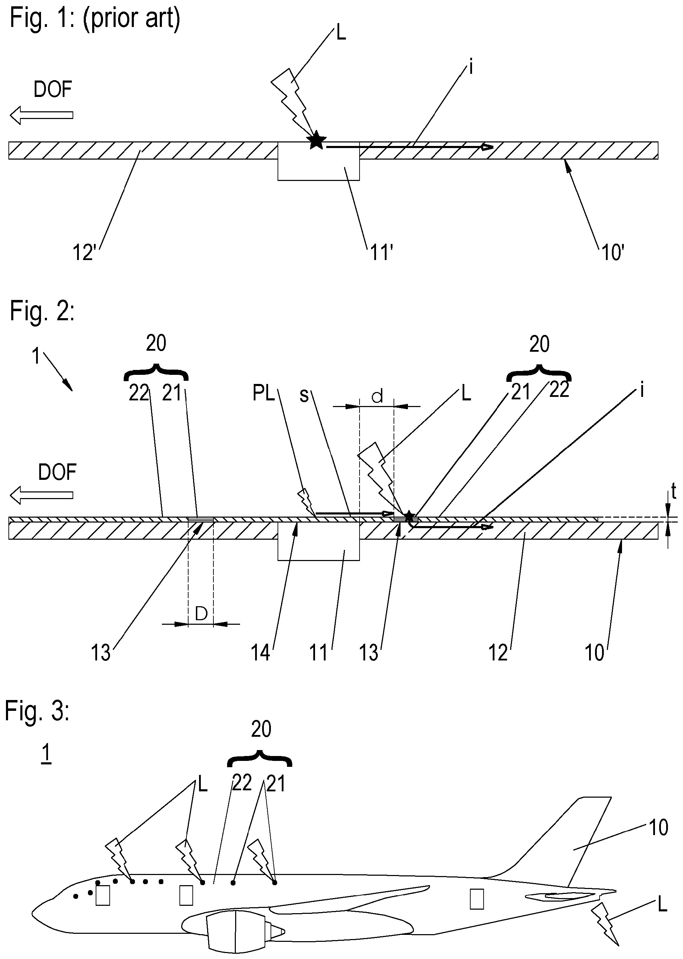

In Figure 1, a surface portion of an object 10' is shown as being struck by a lightning L. In the case depicted, the object 10' is an aircraft flying in flying direction DoF and being protected in accordance with the prior art, namely by means of an electrically conductive structure 12' comprised by the object 10', which electrically conductive structure 12' may be a metal (e.g., aluminium) shell of the aircraft, or a shell of the aircraft made of a fibre reinforced polymer (which may contain carbon fibres or glass fibres, for instance) and provided with a metal foil or a painting comprising metal particles; in particular, the electrically conductive structure 12' may be a fibre-metal-laminate. The object 10' further comprises a component 11' which is not covered by (thus, bare of) the electrically conductive structure 12'. Depending on the function of the component 11', this may be to ensure its performance or due to a limited and/or difficult accessibility of the component, for instance. In particular, the component 11' may be of an electrically insulating material.

However, the lightning L attaching the component 11' in the case schematically depicted in Figure 1 generates a high lightning current i which is conducted through the electrically conductive structure 12' and to an exit point (not shown) where the lightning departs from the object 10'. The passing high lightning current i may damage the component 11', wherein the damage may be laborious and/or costly to repair, e.g., due to the component 11' being of a complex structure and/or difficult to access from an environment of the object 10'. Further to the resulting maintenance efforts themselves, such damages have the disadvantage that the object being an aircraft is unavailable for operation during the repair.

The lightning protection provided by the present invention overcomes these disadvantages, as illustrated in Figure 2. Therein, an arrangement 1 according to an exemplary embodiment of the present invention is partially shown in a sectional view while being struck by a lightning L. The arrangement 1 comprises an object 10, which in the present case is an aircraft having a direction of flight DOF, and a lightning strike protection 20.

The object 10 comprises a component 11 and an electrically conductive structure 12. The electrically conductive structure 12 in particular may be a metal (e.g., aluminium), preferably painted, shell of the aircraft, or a shell of the aircraft made of a fibre reinforced polymer (which may contain carbon fibres and/or glass fibres, for instance) and provided with a painting comprising metal particles and/or with an outer metal foil, outer metal stripes or an outer metal mesh, and preferably being painted; in particular, the electrically conductive structure 12 may be a fibre-metal-laminate.

In the embodiment shown, the component 11 is not covered by the electrically conductive structure 12. Analogously to the above, depending on the function of the component 11, this may be to ensure its performance or due to a limited and/or difficult accessibility of the component, for instance. In particular, the component 11 may be of an electrically insulating material. According to advantageous embodiments, it may be at least a portion of a fastener, a window frame, a door frame, or a skin integrated antenna.

In accordance with the comments above referring to Figure 1, a surface spot 14 of the object 10, which surface spot 14 is at least a portion of a surface of the component 11, has a high damage avoidance priority, because a damage possibly caused in the component 11 by a high lightning current may be laborious and/or costly to repair, e.g., due to the component 11 being of a complex structure and/or limited and/or difficult to access from an environment of the object 10.

By contrast, regions 13 on the surface of the object 10 have a lower damage avoidance priority than the spot 14, for requiring less effort and/or cost for being repaired if damaged by a possible lightning strike. In the embodiment depicted on Figure 2, the regions 13 are provided with respective coverings 21 of the lightning strike protection 20.

A diameter D of the regions 21 preferably is at most 20cm, at most 16cm or at most 12cm. Additionally or alternatively, said diameter D may advantageously be at least 4cm, at least 7cm or at least 10cm.

The spot 14 is covered with a flash-repellent layer 22 of the lightning strike protection 20, which flash-repellent layer extends to the coverings 21 and, in the case depicted, in particular encompasses them. The flash-repellent layer 22 and the coverings 21 have the same thickness t, such that a smooth surface transition from the flash-repellent layer to the covering and, thereby, a low air resistance (drag) is ensured. In particular, said thickness t preferably is at most 150 µm or at most 120 µm or at most 100 µm. The flash-repellent layer 22 may preferably comprise a self-adhesive foil stuck on the surface of the object 10.

A distance d between the spot 14 and a region 13 which is closest in a direction opposite to the flying direction R is, along the surface of the object, preferably at most 2m, at most 1.5m, at most 1m, at most 0.5m or at most 0.1m.

As a consequence, and as indicated in Figure 2, a surface discharge s provoked by a pre-lightning strike PL is led, in the direction opposite to the direction of flight DOF to the nearby covering 21 of said region 13. Moreover, the covering 21 provides an attachment point at which a main current of the lightning L attaches the object 10 and from where the lightning current c is conducted through the region 13 and the electrically conductive structure 12, towards an exit point (not shown).

Accordingly, the spot 14 is protected from being damaged by the pre-lightning PL and the lightning L, which instead may damage the region 13 being less laborious and/or costly to repair. In particular, the damages occurring on the region 13 may preferably require only a cosmetic repair, such as a repair that can be realised by using a functional patch (e.g. US 2022/0234316 A1) or a paint.

In Figure 3, the arrangement 1 is shown in a side view of the object 10 being an aircraft. Therein, the depicted coverings 21 are illustrative; in particular, the lightning strike protection 20 may comprise coverings further to those shown, and/or the coverings 21 may have different dimensions relative to the object.

As mentioned above, said coverings 21 provide respective arc attachment points. Additionally or alternatively, the flash-repellent layer 22 (which in Figure 3 is not visually specified) may comprise one or more clearances (not shown) positioned on a region of the surface of the object 10, such that said region is at least partially bare bare of any cover, and/or one more weaker further portions (not shown) at least partially covering a region having lower damage avoidance priority than a spot covered by the lash-repellent layer 22. Said at least partially bare regions and/or further portions may likewise provide respective arc attachment points.

As indicated in Figure 3, possible several lightning strikes L attach the flying object 10 (aircraft) at a first side which in this selected scenario is an upper (roof) front portion of the object, and they exit from the object 10 in a lower (bottom) tail portion.

Disclosed is a method of providing an optimised lightning strike protection 20 on an object 10. The method comprises identifying, on a surface of the object 10, at least one spot 14 and one or more region/s 13, wherein the region/s has/have a lower damage avoidance priority than the at least one spot 14. The method further comprises covering the at least one spot 14 with a flash-repellent layer 22 which extends to at least one of the one or more region/s 13. Therein, the at least one region 13 is at least partially left bare of any cover, and/or at least partially covered with a further portion of the flash-repellent layer which has a lower breakdown voltage (e.g. reduced layer thickness) than the portion covering the at least one spot, and/or the at least one region 13 is at least partially provided with an electrically conductive covering.

Further disclosed is an arrangement 1 comprising an object 10 and a lightning strike protection 20.

### Reference signs

- 1: arrangement
- 10: object
- 11, 11': component
- 12, 12': electrically conductive structure
- 13: region
- 14: spot
- 20: lightning strike protection
- 21: covering
- 22: flash-repellent layer
- d: distance between the spot 14 and region 13
- D: diameter of covering 21
- DOF: direction of flight
- i: lightning currentL lightning
- PL: pre-lightning
- s: surface discharge
- t: thickness of covering 21 and flash-repellent layer 22

## Claims

1. Method of providing a lightning strike protection (20) on an object (10) such as an aircraft, the method comprising
- identifying, on a surface of the object (10), at least one spot (14) to be protected against a possible lightning damage;
- identifying one or more region/s (13) on said surface having a lower damage avoidance priority than the at least one spot (14);
- covering the at least one spot (14) with a portion of a flash-repellent layer (22) extending to at least one of the one or more region/s (13),
wherein the at least one region (13) is at least partially covered with a further portion of the flash-repellent layer which has a lower breakdown voltage than the portion covering the at least one spot.

2. Method according to claim 1, wherein a distance (d), along the surface of the object (10), from the at least one spot (14) to at least one of the one or more region/s (13) is at most 2m, at most 1.5m, at most 1m, at most 0.5m, or at most 0.1m.

3. Method according to one of claims 1 or 2, wherein the at least one region has a diameter (D) of
- at most 20cm, at most 16cm or at most 12cm; and/or
- at least 4cm, at least 7cm or at least 10cm.

4. Method according to one of the preceding claims, further comprising determining a position of at least one of the one or more regions (13) and/or determining a size of at least one of the one or more region/s (13),
respectively based on
- a simulation of an electrical field of the surface of the object (10) before a presumed lightning strike; and/or
- a simulation of an airflow around the object (10); and/or
- at least one simulation of an icing on the surface of the object (10).

5. Method according to one of the preceding claims, wherein the flash-repellent layer (22) comprises a self-adhesive foil.

6. Method according to one of the preceding claims, wherein the further portion of the flash-repellent layer
- comprises a paint with metallic particles and/or comprising a wind turbine lightning receptor; and/or
- has electrical contact to an electrically conductive structure (12) of the object (10).

7. Method according to one of the preceding claims, wherein the at least one spot (14) is at least partially positioned on a surface of a component (11) of the object, the component (11) being at least a part of a fastener, a window frame, a door frame, or a skin integrated antenna.

8. Method according to one of the preceding claims, wherein a plurality of regions (13) on said surface is identified as having a lower damage avoidance priority than the at least one spot (14), wherein within a surface area covering at least 8m x 10m or at least 12m x 18m, each field of 2m x 2m or each field of 1.5m x 1.5m or each field of 1m x 1m comprises at least one of the regions (13).

9. Method according to one of the preceding claims, wherein the object (10) is an aircraft, a spacecraft, a wind turbine, a vessel, or a transport vehicle.

10. Arrangement (1) comprising an object (10) and a lightning strike protection (20), wherein
- the object has a surface comprising one or more region/s (13) and at least one spot (14), and
- the lightning strike protection (20) comprises a flash-repellent layer (22), a portion of which covers the at least one spot (14) and which extends to at least one of the region/s (13),
**characterized in that**
the at least one region is at least partially covered with a further portion of the flash-repellent layer, which portion has a lower breakdown voltage than a portion covering the at least one spot.

11. Arrangement according to claim 10, wherein
- a distance (d), along the surface of the object, from the at least one spot to at least one of the one or more region/s is at most 2m, at most 1.5m, at most 1m, at most 0.5m, or at most 0.1m; and/or
- the at least one of the one or more region/s has a diameter (D) of at most 20cm, at most 16cm or at most 12cm; and/or of at least 4cm, at least 7cm or at least 10cm.

12. Arrangement according to one of claims 10 or 11, wherein the flash-repellent layer (22) comprises a self-adhesive foil.

13. Arrangement according to one of claims 10 to 12, wherein the further portion of the flash-repellent layer
- comprises a paint with metallic particles and/or comprising a wind turbine lightning receptor; and/or
- has electrical contact to an electrically conductive structure (12) of the object (10).

14. Arrangement according to one of claims 10 to 13, wherein
- the at least one spot (14) is at least partially positioned on a surface of a component (11) of the object, the component (11) being at least a part of a fastener, a window frame, a door frame or a skin integrated antenna; and/or
- the surface of the object (10) comprises a plurality of said regions (13) such that each field of 2m x 2m or each field of 1.5m x 1.5m or each field of 1m x 1m within a surface area covering at least 8m x 10m or at least 12m x 18m comprises at least one of the regions (13).

15. Arrangement according to one of claims 10 to 14, wherein the object (10) is an aircraft, a spacecraft, a wind turbine, a vessel, or a transport vehicle.

## Patentansprüche

1. Verfahren zum Bereitstellen eines Blitzeinschlagschutzes (20) an einem Objekt (10), wie etwa einem Flugzeug, wobei das Verfahren Folgendes umfasst
- Identifizieren, auf einer Oberfläche des Objekts (10), mindestens einer vor einem möglichen Blitzschaden zu schützenden Stelle (14);
- Identifizieren eines oder mehrerer Bereiche (13) auf der Oberfläche, die eine niedrigere Schadenvermeidungspriorität als die mindestens eine Stelle (14) aufweisen;
- Abdecken der mindestens einen Stelle (14) mit einem Abschnitt einer blitzabweisenden Schicht (22), die sich zu mindestens einem des einen oder der mehreren Bereiche (13) erstreckt,
wobei der mindestens eine Bereich (13) zumindest teilweise mit einem weiteren Abschnitt der blitzabweisenden Schicht abgedeckt wird, der eine niedrigere Durchbruchspannung als der Abschnitt aufweist, der die mindestens eine Stelle abdeckt.

2. Verfahren nach Anspruch 1, wobei ein Abstand (d) entlang der Oberfläche des Objekts (10) von der mindestens einen Stelle (14) zu mindestens einem des einen oder der mehreren Bereiche (13) höchstens 2 m, höchstens 1,5 m, höchstens 1 m, höchstens 0,5 m oder höchstens 0,1 m beträgt.

3. Verfahren nach einem der Ansprüche 1 oder 2, wobei der mindestens eine Bereich folgenden Durchmesser (D) aufweist
- höchstens 20 cm, höchstens 16 cm oder höchstens 12 cm; und/oder
- mindestens 4 cm, mindestens 7 cm oder mindestens 10 cm.

4. Verfahren nach einem der vorhergehenden Ansprüche, ferner umfassend Bestimmen einer Position mindestens eines des einen oder der mehreren Bereiche (13) und/oder Bestimmen einer Größe mindestens eines des einen oder der mehreren Bereiche (13),
jeweils basierend auf
- einer Simulation eines elektrischen Feldes der Oberfläche des Objekts (10) vor einem angenommenen Blitzeinschlag; und/oder
- einer Simulation eines Luftstroms um das Objekt (10); und/oder
- mindestens einer Simulation einer Vereisung auf der Oberfläche des Objekts (10).

5. Verfahren nach einem der vorhergehenden Ansprüche, wobei die blitzabweisende Schicht (22) eine selbstklebende Folie umfasst.

6. Verfahren nach einem der vorhergehenden Ansprüche, wobei der weitere Abschnitt der blitzabweisenden Schicht
- einen Lack mit metallischen Partikeln umfasst und/oder einen Blitzschutzrezeptor einer Windkraftanlage umfasst; und/oder
- einen elektrischen Kontakt zu einer elektrisch leitfähigen Struktur (12) des Objekts (10) hat.

7. Verfahren nach einem der vorhergehenden Ansprüche, wobei die mindestens eine Stelle (14) zumindest teilweise auf einer Oberfläche einer Komponente (11) des Objekts positioniert ist, wobei die Komponente (11) mindestens ein Teil eines Befestigungselements, eines Fensterrahmens, eines Türrahmens oder einer in eine Haut integrierten Antenne ist.

8. Verfahren nach einem der vorhergehenden Ansprüche, wobei mehrere Bereiche (13) auf der Oberfläche als eine niedrigere Schadensvermeidungspriorität als die mindestens eine Stelle (14) aufweisend identifiziert werden, wobei innerhalb eines Oberflächenbereichs, der mindestens 8 m x 10 m oder mindestens 12 m x 18 m abdeckt, jedes Feld von 2 m x 2 m oder jedes Feld von 1,5 m x 1,5 m oder jedes Feld von 1 m x 1 m mindestens einen der Bereiche (13) umfasst.

9. Verfahren nach einem der vorhergehenden Ansprüche, wobei das Objekt (10) ein Flugzeug, ein Raumfahrzeug, eine Windkraftanlage, ein Schiff oder ein Transportfahrzeug ist.

10. Anordnung (1), die ein Objekt (10) und einen Blitzeinschlagschutz (20) umfasst, wobei
- das Objekt eine Oberfläche aufweist, die einen oder mehrere Bereiche (13) und mindestens eine Stelle (14) umfasst, und
- der Blitzeinschlagschutz (20) eine blitzabweisende Schicht (22) umfasst, von der ein Abschnitt die mindestens eine Stelle (14) abdeckt und die sich zu mindestens einem der Bereiche (13) erstreckt,
**dadurch gekennzeichnet, dass**
der mindestens eine Bereich zumindest teilweise mit einem weiteren Abschnitt der blitzabweisenden Schicht abgedeckt ist, wobei der Abschnitt eine niedrigere Durchbruchspannung aufweist als ein Abschnitt, der die mindestens eine Stelle abdeckt.

11. Anordnung nach Anspruch 10, wobei
- ein Abstand (d) entlang der Oberfläche des Objekts von der mindestens einen Stelle zu mindestens einem des einen oder der mehreren Bereiche höchstens 2 m, höchstens 1,5 m, höchstens 1 m, höchstens 0,5 m oder höchstens 0,1 m beträgt; und/oder
- der mindestens eine des einen oder der mehreren Bereiche einen Durchmesser (D) von höchstens 20 cm, höchstens 16 cm oder höchstens 12 cm; und/oder von mindestens 4 cm, mindestens 7 cm oder mindestens 10 cm aufweist.

12. Anordnung nach einem der Ansprüche 10 oder 11, wobei die blitzabweisende Schicht (22) eine selbstklebende Folie umfasst.

13. Anordnung nach einem der Ansprüche 10 bis 12, wobei der weitere Abschnitt der blitzabweisenden Schicht
- einen Lack mit metallischen Partikeln umfasst und/oder einen Blitzschutzrezeptor einer Windkraftanlage umfasst; und/oder
- einen elektrischen Kontakt zu einer elektrisch leitfähigen Struktur (12) des Objekts (10) hat.

14. Anordnung nach einem der Ansprüche 10 bis 13, wobei
- die mindestens eine Stelle (14) zumindest teilweise auf einer Oberfläche einer Komponente (11) des Objekts positioniert ist, wobei die Komponente (11) mindestens ein Teil eines Befestigungselements, eines Fensterrahmens, eines Türrahmens oder einer in eine Haut integrierten Antenne ist; und/oder
- die Oberfläche des Objekts (10) mehrere der Bereiche (13) umfasst, so dass jedes Feld von 2 m x 2 m oder jedes Feld von 1,5 m x 1,5 m oder jedes Feld von 1 m x 1 m innerhalb eines Oberflächenbereichs, der mindestens 8 m x 10 m oder mindestens 12 m x 18 m abdeckt, mindestens einen der Bereiche (13) umfasst.

15. Anordnung nach einem der Ansprüche 10 bis 14, wobei das Objekt (10) ein Flugzeug, ein Raumfahrzeug, eine Windkraftanlage, ein Schiff oder ein Transportfahrzeug ist.

## Revendications

1. Procédé de mise en place d'une protection contre la foudre (20) sur un objet (10) tel qu'un aéronef, le procédé comprenant
- identifier, sur une surface de l'objet (10), au moins un point (14) à protéger contre un éventuel endommagement par la foudre ;
- identifier une ou plusieurs régions (13) de ladite surface présentant une priorité de prévention d'endommagement inférieure par comparaison avec l'au moins un point (14) ;
- recouvrir l'au moins un point (14) avec une partie d'une couche anti-éclair (22) s'étendant jusqu'à la ou au moins l'une des régions (13),
dans lequel l'au moins une région (13) est au moins partiellement recouverte avec une autre partie de la couche anti-éclair qui a une tension disruptive inférieure par comparaison avec la partie recouvrant l'au moins un point.

2. Procédé selon la revendication 1, dans lequel une distance (d), le long de la surface de l'objet (10), entre l'au moins un point (14) et la ou au moins une des régions (13) est d'au plus 2 m, d'au plus 1,5 m, d'au plus 1 m, d'au plus 0,5 m ou d'au plus 0,1 m.

3. Procédé selon l'une des revendications 1 et 2, dans lequel l'au moins une région a un diamètre (D)
- d'au plus 20 cm, d'au plus 16 cm ou d'au plus 12 cm ; et/ou
- d'au moins 4 cm, d'au moins 7 cm ou d'au moins 10 cm.

4. Procédé selon l'une des revendications précédentes, comprenant en outre la détermination d'une position de la ou d'au moins l'une des régions (13) et/ou la détermination d'une taille de la ou d'au moins l'une des régions (13),
sur la base, respectivement,
- d'une simulation d'un champ électrique de la surface de l'objet (10) avant un foudroiement présumé ; et/ou
- d'une simulation d'un écoulement d'air autour de l'objet (10) ; et/ou
- d'au moins une simulation d'un givrage sur la surface de l'objet (10).

5. Procédé selon l'une des revendications précédentes, dans lequel la couche anti-éclair (22) comprend une feuille auto-adhésive.

6. Procédé selon l'une des revendications précédentes, dans lequel l'autre partie de la couche anti-éclair
- comprend une peinture avec des particules métalliques et/ou comportant un récepteur de foudre d'éolienne ; et/ou
- a un contact électrique avec une structure électriquement conductrice (12) de l'objet (10).

7. Procédé selon l'une des revendications précédentes, dans lequel l'au moins un point (14) est au moins partiellement positionné sur une surface d'un composant (11) de l'objet, le composant (11) étant au moins une partie d'une attache, d'un cadre de fenêtre, d'un cadre de porte ou d'une antenne intégrée à la peau.

8. Procédé selon l'une des revendications précédentes, dans lequel une pluralité de régions (13) sur ladite surface est identifiée comme ayant une priorité de prévention d'endommagement inférieure par comparaison avec l'au moins un point (14), dans lequel dans une aire couvrant au moins 8 m x 10 m ou au moins 12 m x 18 m, chaque champ de 2 m x 2 m ou chaque champ de 1,5 m x 1,5 m ou chaque champ de 1 m x 1 m comprend au moins une des régions (13).

9. Procédé selon l'une des revendications précédentes, dans lequel l'objet (10) est un aéronef, un engin spatial, une éolienne, un navire, ou un véhicule de transport.

10. Structure (1) comprenant un objet (10) et une protection contre la foudre (20)
- l'objet possédant une surface comprenant une ou plusieurs régions (13) et au moins un point (14), et
- la protection contre la foudre (20) comportant une couche anti-éclair (22) dont une partie recouvre l'au moins un point (14) et qui s'étend jusqu'à la ou au moins l'une des zones (13),
**caractérisée en ce que**
l'au moins une région est au moins partiellement recouverte avec une autre partie de la couche anti-éclair, ladite partie ayant une tension disruptive inférieure par comparaison avec une partie recouvrant l'au moins un point.

11. Structure selon la revendication 10, dans laquelle
- une distance (d), le long de la surface de l'objet, entre l'au moins un point et la ou au moins une des régions est d'au plus 2 m, d'au plus 1,5 m, d'au plus 1 m, d'au plus 0,5 m ou d'au plus 0,1 m ; et/ou
- la ou l'au moins une des régions a un diamètre (D) d'au plus 20 cm, d'au plus 16 cm ou d'au plus 12 cm ; et/ou d'au moins 4 cm, d'au moins 7 cm ou d'au moins 10 cm.

12. Structure selon l'une des revendications 10 et 11, dans laquelle la couche anti-éclair (22) comprend une feuille auto-adhésive.

13. Structure selon l'une des revendications 10 à 12, dans laquelle l'autre partie de la couche anti-éclair
- comprend une peinture avec des particules métalliques et/ou comportant un récepteur de foudre d'éolienne ; et/ou
- a un contact électrique avec une structure électriquement conductrice (12) de l'objet (10).

14. Structure selon l'une des revendications 10 à 13, dans laquelle
- l'au moins un point (14) est au moins partiellement positionné sur une surface d'un composant (11) de l'objet, le composant (11) étant au moins une partie d'une attache, d'un cadre de fenêtre, d'un cadre de porte ou d'une antenne intégrée à la peau ; et/ou
- la surface de l'objet (10) comprend une pluralité desdites régions (13) de sorte que chaque champ de 2 m x 2 m ou chaque champ de 1,5 m x 1,5 m ou chaque champ de 1 m x 1 m dans une aire couvrant au moins 8 m x 10 m ou au moins 12 m x 18 m comprend au moins une des régions (13).

15. Structure selon l'une des revendications 10 à 14, dans laquelle l'objet (10) est un aéronef, un engin spatial, une éolienne, un navire ou un véhicule de transport.
